# EUROPEAN PATENT APPLICATION

(11) **EP 4 234 758 A1**
(43) Date of publication of application: **30.08.2023**
(21) Application number: 21882602.2
(22) Date of filing: 06.10.2021
(51) Int. Cl.: C23C 18/30, C23C 18/40

(54) **METHOD FOR MANUFACTURING CONDUCTIVE PATTERN-PROVIDED STRUCTURE**

(30) Priority: 21.10.2020 JP 2020176695
(71) Applicant: Asahi Kasei Kabushiki Kaisha, Tokyo 1000006 (JP)
(72) Inventor: KOZONO, Tomoko, Tokyo 100-0006 (JP); YUMOTO, Toru, Tokyo 100-0006 (JP)
(74) Representative: D Young & Co LLP
(86) International application number: PCT/JP2021/037056
(87) International publication number: WO 2022/085461

(57) **Abstract**

Provided is a method that is for manufacturing a conductive pattern-provided structure, that involves simple manufacturing steps, and that enables formation of a conductive pattern-provided structure having excellent interlayer adhesion. One mode of the present invention provides a method for manufacturing a conductive pattern-provided structure, the method comprising: a coating film formation step for obtaining a coating film by printing, on a base material, a dispersion that contains copper oxide-containing particles; and a plating step for performing electroless plating on the coating film by using a plating solution. The plating solution contains EDTA (ethylenediaminetetraacetic acid).

## Description

### FIELD

The present invention relates to a method for manufacturing a conductive pattern-provided structure.

### BACKGROUND

Circuit boards have a structure in which conductive wiring is provided on a base material. The method for manufacturing a circuit board is generally as follows. First, a photoresist is applied on a base material to which a metal foil is attached. The photoresist is then exposed and developed to obtain negative features of a desired circuit pattern. Next, the metal foil on portions not covered in photoresist is removed by chemical etching to form a pattern. A high-performance circuit board can thereby be manufactured. However, the method of the prior art has drawbacks such as having a large number of steps, being complex, and requiring a photoresist material.

Direct printing technique, in which a desired wiring pattern is directly printed on a base material with a dispersion having dispersed therein particles of a metal or a metal oxide, has been receiving attention. This technique has a small number of steps, does not require use of a photoresist material, and has very high productivity. However, when metal particles are used, there may be a problem in stability due to oxidation of the metal particles themselves. When metal oxide particles are used, since a reduction firing step is required to obtain conductivity, there are problems that usable base materials are limited and requirement of a reducing gas results in high cost.

Relating to the above, for example, PTL 1 discloses a conductive film forming method for forming a conductive film having a predetermined pattern on a substrate. In this method, a metal film containing metal particles is formed on the substrate by a droplet discharge method so as to form a pattern substantially the same as the conductive film pattern, and then a plating film is formed by carrying out electroless plating at least once so as to cover the surface of the metal film to thereby obtain a conductive film.

### [CITATION LIST]

### [PATENT LITERATURE]

[PTL 1] Japanese Unexamined Patent Publication (Kokai) No. 2006-128228

### SUMMARY

### [TECHNICAL PROBLEM]

The method disclosed in PTL 1 attempts to form a conductive film having excellent conductivity and reliability by combining pattern formation using metal particles and plating. However, adhesion between the conductive film and the base material and/or adhesion between layers within the conductive film in this method was insufficient.

In view of such circumstances, an object of an aspect of the present invention is to provide a method for manufacturing a conductive pattern-provided structure which has a simple manufacturing process and is capable of forming a conductive pattern-provided structure having satisfactory interlayer adhesion.

### [SOLUTION TO PROBLEM]

The present disclosure encompasses the following aspects.
[1] A method for manufacturing a conductive pattern-provided structure, comprising:
   a coating film formation step of printing a dispersion comprising copper oxide-containing particles on a base material to obtain a coating film, and
   a plating step of carrying out electroless plating on the coating film using a plating solution, wherein
   the plating solution comprises EDTA (ethylenediaminetetraacetic acid).
[2] The method for manufacturing a conductive pattern-provided structure according to the above Aspect 1, further comprising a reduction step before the plating step.
[3] The method for manufacturing a conductive pattern-provided structure according to the above Aspect 2, wherein the reduction step is a wet reduction step.
[4] The method for manufacturing a conductive pattern-provided structure according to the above Aspect 2 or 3, wherein the reduction step comprises immersing the coating film in a solution comprising a glycine compound represented by the following formula:

   (R¹)₂N-C-COOR²

   wherein R¹ and R² are each independently hydrogen or a monovalent group, and a plurality of R¹ in the formula may be the same as or different from each other.
[5] The method for manufacturing a conductive pattern-provided structure according to the above Aspect 4, wherein the glycine compound is N,N-di(2-hydroxyethyl)glycine.
[6] The method for manufacturing a conductive pattern-provided structure according to the above Aspect 4 or 5, wherein the solution is an aqueous solution, and the glycine compound has a concentration of 1% by mass or greater and 50% by mass or less.
[7] The method for manufacturing a conductive pattern-provided structure according to any of the above Aspects 1 to 6, further comprising a delipidation step before the plating step.
[8] The method for manufacturing a conductive pattern-provided structure according to any of the above Aspects 1 to 7, wherein the coating film formation step is carried out by inkjet printing.
[9] The method for manufacturing a conductive pattern-provided structure according to any of the above Aspects 1 to 8, further comprising a drying step of drying the coating film between the coating film formation step and the plating step.
[10] The method for manufacturing a conductive pattern-provided structure according to any of the above Aspects 1 to 9, wherein the dispersion comprises a dispersant comprising a phosphate ester.
[11] The method for manufacturing a conductive pattern-provided structure according to the above Aspect 10, wherein the dispersant has an acid value (mgKOH/g) of 20 or greater and 130 or less.
[12] The method for manufacturing a conductive pattern-provided structure according to any of the above Aspects 1 to 11, wherein the dispersion contains a reductant, and the reductant is hydrazine.
[13] The method for manufacturing a conductive pattern-provided structure according to any of the above Aspects 1 to 12, wherein the dispersion comprises one or more dispersion media selected from the group consisting of 1-hexanol, 1-heptanol, and 1-octanol.
[14] The method for manufacturing a conductive pattern-provided structure according to any of the above Aspects 1 to 13, wherein the copper oxide-containing particles have an average particle size of 1 nm or more and 100 nm or less.
[15] The method for manufacturing a conductive pattern-provided structure according to any of the above Aspects 1 to 14, wherein the plating solution comprises a copper ion source and a reductant.
[16] The method for manufacturing a conductive pattern-provided structure according to the above Aspect 15, wherein the copper ion source is one or more selected from the group consisting of CuSO₄, CuCl₂, CuCl, CuNO₃, and Cu₃(PO₄)₂.
[17] The method for manufacturing a conductive pattern-provided structure according to the above Aspect 15 or 16, wherein the reductant is one or more selected from the group consisting of formaldehyde, potassium tetrahydroxide, dimethylamine borane, glyoxylic acid, and phosphinic acid.
[18] The method for manufacturing a conductive pattern-provided structure according to any of the above Aspects 1 to 17, wherein the base material has an adhesion layer, and in the coating film formation step, the dispersion is printed on the adhesion layer.
[19] A conductive pattern structure manufacturing kit, comprising at least two selected from the group consisting of:
   a dispersion comprising copper oxide-containing particles;
   a plating solution comprising EDTA (ethylenediaminetetraacetic acid); and
   a reducing solution comprising a glycine compound represented by the following formula:

      (R¹)₂N-C-COOR²
   wherein R¹ and R² are each independently hydrogen or a monovalent group, and a plurality of R¹ in the formula may be the same as or different from each other.

### [ADVANTAGEOUS EFFECTS OF INVENTION]

According to one aspect of the present invention, a method for manufacturing a conductive pattern-provided structure which has a simple manufacturing process and is capable of forming a conductive pattern-provided structure having satisfactory interlayer adhesion can be provided.

### BRIEF DESCRIPTION OF DRAWINGS

FIG. 1 is a cross-sectional schematic diagram illustrating the relationship between copper oxide and a phosphate ester salt in a dispersion used in one aspect of the present invention.
FIG. 2 is a cross-sectional schematic diagram illustrating the manufacturing procedure of the conductive pattern-provided structure according to one aspect of the present invention.

### DESCRIPTION OF EMBODIMENTS

Hereinafter, embodiments of the present invention will be described. However, the present invention is not limited to these embodiments.

An aspect of the present invention provides a method for manufacturing a conductive pattern-provided structure. In one aspect, the method comprises a coating film formation step of printing a dispersion comprising copper oxide-containing particles on a base material to obtain a coating film and a plating step of carrying out electroless plating using a plating solution.

In one aspect, the plating solution comprises EDTA (ethylenediaminetetraacetic acid).

According to the method of the present disclosure, since a plated layer can be formed in a desired pattern without the need for firing by forming the plated layer on a coating film formed by printing, productivity can be improved as compared to, for example, a conventional method using a photoresist. In one aspect, a region having a relatively low porosity can be formed by plating, and thus the resistance of a conductive pattern-provided structure can be decreased. A specific method will be described below. According to the method of the present embodiment, since the plated layer can be formed by a wet method, a reducing gas and/or a high temperature as in the prior art are unnecessary.

Hereinafter, suitable examples of each step will be described.

### <Coating film formation step>

In the present step, a dispersion (herein sometimes referred to as a copper oxide ink) comprising copper oxide-containing particles is applied on a base material to obtain a coating film.

### [Dispersion comprising copper oxide-containing particles]

The dispersion (copper oxide ink) comprises copper oxide-containing particles. The copper oxide-containing particles typically consist of a copper oxide, but can comprise additional components as long as the effect of the present invention is not impaired. The dispersion may or may not further comprise a dispersion medium, a dispersant, and/or a reductant.

### (Copper oxide)

Examples of the copper oxide include cuprous oxide (Cu₂O) and cupric oxide (CuO). Cuprous oxide is preferable. Cuprous oxide is advantageous in terms of having the price of copper, which is less expensive as compared to precious metals such as silver, and being difficult for migration to occur. A commercially available product or a synthetic product may be used as the copper oxide.

For example, the synthesis method of cuprous oxide includes the following methods.
(1) A method in which water and a copper acetylacetonate complex are added to a polyol solvent, the organocopper compound is dissolved by heating, water necessary for reaction is then added thereto, and the mixture is heated to the reduction temperature of the organocopper for reduction.
(2) A method in which an organocopper compound (copper-N-nitrosophenylhydroxylamine complex) is heated in a high temperature of about 300 °C in an inert atmosphere in the presence of a protectant such as hexadecylamine.
(3) A method in which a copper salt dissolved in a solvent is reduced with hydrazine.

Of these, method (3) is preferable since the method is simple to carry out and cuprous oxide having a small average particle size can be obtained.

The synthesis method of cupric oxide includes the following methods.
(1) A method in which sodium hydroxide is added to an aqueous solution of cupric chloride or copper sulfate to generate copper hydroxide, followed by heating.
(2) A method of pyrolysis by heating copper nitrate, copper sulfate, copper carbonate, or copper hydroxide at about 600 °C in air.

Of these, method (1) is preferable since cupric oxide having a small average particle size can be obtained.

After completion of synthesis, a product solution (as a supernatant) and a copper oxide (as a precipitant) are separated using a known method such as centrifugation. A dispersion medium described below and optionally a dispersant described below are added to the obtained copper oxide, and the mixture is stirred and dispersed by a known method such as a homogenizer. Depending on the dispersion medium, the copper oxide may be difficult to disperse and may be insufficiently dispersed. In such a case, as an example, after dispersing the copper oxide using an alcohol (for example, butanol) as a dispersion medium in which copper oxide is easily dispersed, replacement to a desired dispersion medium and enrichment to a desired concentration are carried out, whereby the copper oxide can be satisfactorily dispersed in a desired dispersion medium. An example of the method includes a method of enrichment using a UF membrane and repeated dilution and enrichment using an appropriate dispersion medium. The copper oxide dispersion thus obtained is used for printing.

In one aspect, the copper oxide is finely particulate. The average particle size of the copper oxide-containing particles is preferably 1 nm or more, 3 nm or more, or 5 nm or more, and is preferably 100 nm or less, 50 nm or less, or 40 nm or less. As described herein, the average particle size is the particle size when dispersing in the dispersion, and is a value measured by the cumulant method (using, for example, FPAR-1000 manufactured by Otsuka Electronics Co., Ltd.). Specifically, the average particle size is not limited to a primary particle size, but may be a secondary particle size. When the average particle size is 100 nm or less, a pattern can be formed at a low temperature, which is preferable in terms of expanding the versatility of the base material and the tendency to easily form a fine pattern on the base material. When the average particle size is 1 nm or more, the dispersion stability of the copper oxide-containing particles in the dispersion is satisfactory, which is preferable in terms of satisfactory long-term storage stability and the ability to produce a uniform thin film. In one aspect, the particles in the dispersion consist substantially only of copper oxide-containing particles. In this case, the value of the average particle size measured for the dispersion can be regarded as the average particle size of the copper oxide-containing particles.

In one aspect, the copper oxide-containing particles comprise hydrazine. The hydrazine may form a hydrate (i.e., hydrazine in the present disclosure is a concept that includes hydrazine hydrate). The hydrazine may be a residue of hydrazine used as a reductant for copper oxide when manufacturing the copper oxide-containing particles, or may be added separately when manufacturing the particles.

The content ratio of copper oxide in the copper oxide-containing particles is preferably 10% by mass or greater, 30% by mass or greater, 50% by mass or greater, or 70% by mass or greater, and is preferably 100% by mass or less, 99% by mass or less, or 98% by mass or less.

The content ratio of hydrazine in the copper oxide-containing particles is preferably 0.000000001% by mass or greater, 0.0000001% by mass or greater, or 0.0000005% by mass or greater, and is preferably 10% by mass or less, 5% by mass or less, or 1% by mass or less.

The mass ratio of hydrazine relative to the copper oxide in the copper oxide-containing particles is preferably 0.00001 or greater, 0.0001 or greater, or 0.0002 or greater, and is preferably 1 or less, 0.1 or less, or 0.01 or less.

The mass ratio of copper oxide in 100% by mass of the dispersion is preferably 5% by mass or greater, 10% by mass or greater, or 15% by mass or greater, and is preferably 60% by mass or less, 55% by mass or less, or 50% by mass or less.

### (Dispersion medium)

The dispersion medium is a substance in which copper oxide-containing particles can be dispersed. In one aspect, the dispersion medium can dissolve the dispersant. From the viewpoint of forming a conductive pattern using a copper oxide ink, the volatility of the dispersion medium affects workability. Therefore, it is preferable that the dispersion medium be suitable for a method of forming a conductive pattern, for example, a coating method (particularly printing). Specifically, it is preferable that the dispersion medium be selected according to dispersibility and printing workability.

As the dispersion medium, alcohols (monohydric alcohols and polyhydric alcohols (for example, glycols), ethers of alcohols (for example, glycols), and esters of alcohols (for example, glycols)) can be used. Specific examples of the dispersion medium include propylene glycol monomethyl ether acetate, 3-methoxy-3-methyl-butyl acetate, ethoxyethyl propionate, propylene glycol monomethyl ether, propylene glycol monoethyl ether, propylene glycol monopropyl ether, propylene glycol tertiary butyl ether, dipropylene glycol monomethyl ether, ethylene glycol butyl ether, ethylene glycol ethyl ether, ethylene glycol methyl ether, ethylene glycol, 1,2-propylene glycol, 1,3-butylene glycol, 2-pentanediol, 2-methylpentane-2,4-diol, 2,5-hexanediol, 2,4-heptanediol, 2-ethylhexane-1,3-diol, diethylene glycol, hexanediol, octanediol, triethylene glycol, tri-1,2-propylene glycol, glycerol, ethylene glycol monohexyl ether, diethylene glycol monoethyl ether, diethylene glycol monobutyl ether, ethylene glycol monobutyl acetate, diethylene glycol monoethyl ether acetate, methanol, ethanol, n-propanol, i-propanol, n-butanol, i-butanol, 2-butanol, t-butanol, n-pentanol, i-pentanol, 2-methylbutanol, 2-pentanol, t-pentanol, 3-methoxybutanol, n-hexanol, 2-methylpentanol, 1-hexanol, 2-hexanol, 2-ethylbutanol, 1-heptanol, 2-heptanol, 3-heptanol, n-octanol, 2-ethylhexanol, 1-octanol, 2-octanol, n-nonyl alcohol, 2,6-dimethyl-4-heptanol, n-decanol, cyclohexanol, methylcyclohexanol, 3,3,5-trimethylcyclohexanol, benzyl alcohol, and diacetone alcohol. These may be used singly, or a plurality thereof may be mixed and used. Depending on the coating method, the dispersion medium is selected in consideration of evaporability, equipment used for coating, and solvent resistance of the base material (i.e., the base material to be coated). It is particularly preferable that one or more dispersion media selected from the group consisting of 1-hexanol, 1-heptanol, and 1-octanol be contained in terms of slow drying, less aggregation of ink during continuous printing, satisfactory intermittent inkjet stability, and less abnormal flight.

The boiling point of the dispersion medium is preferably high in terms of improving printing continuity, for example, preferably 50 °C or higher, more preferably 100 °C or higher, and even more preferably 150 °C or higher. The above boiling point is preferably 400 °C or lower, more preferably 300 °C or lower, and even more preferably 250 °C or lower from the viewpoint of obtaining satisfactory performance as a dispersion medium.

The content of the dispersion medium in the entire dispersion is preferably 30% by mass or greater, 40% by mass or greater, or 50% by mass or greater, and is preferably 95% by mass or less or 90% by mass or less.

### (Dispersant)

As the dispersant, a compound in which a copper oxide can be dispersed in a dispersion medium can be used. The number average molecular weight of the dispersant is preferably 300 or greater, 350 or greater, or 400 or greater, and is preferably 300,000 or less, 200,000 or less, or 150,000 or less. As described herein, the number average molecular weight is a value determined by standard polystyrene conversion using gel permeation chromatography. When the number average molecular weight is 300 or greater, there is a tendency that the insulating property is excellent and the contribution to dispersion stability of the dispersion is large. The number average molecular weight is preferably 300,000 or less in terms of handleability. The dispersant preferably has a group that has an affinity for copper oxides. From this viewpoint, the dispersant preferably comprises a phosphorus-containing organic substance or is a phosphorus-containing organic substance, comprises a phosphate ester or is a phosphate ester, or comprises a phosphate ester polymer or is a phosphate ester polymer. As the phosphate ester polymer, for example, a structure represented by the following formula (1): 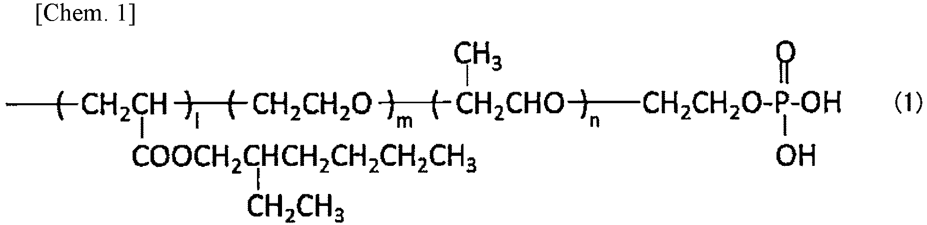 wherein l is an integer of 1 to 10000; m is an integer of 1 to 10000; and n is an integer of 1 to 10000, is preferable since adsorption to a copper oxide, particularly cuprous oxide, and adhesion to the base material are excellent.

In the chemical formula (1), l is more preferably 1 to 5000, and even more preferably 1 to 3000.

In the chemical formula (1), m is more preferably 1 to 5000, and even more preferably 1 to 3000.

In the chemical formula (1), n is more preferably 1 to 5000, and even more preferably 1 to 3000.

In one aspect, the decomposition temperature of the phosphorus-containing organic substance is preferably 600 °C or lower, more preferably 400 °C or lower, and even more preferably 200 °C or lower. The decomposition temperature may be 50 °C or higher, 80 °C or higher, or 100 °C or higher from the viewpoint of ease of selecting a dispersant having an excellent dispersion stability improving effect. In one aspect, the boiling point of the phosphorus-containing organic substance is preferably 300 °C or lower, more preferably 200 °C or lower, and even more preferably 150 °C or lower. The boiling point may be 30 °C or higher, 50 °C or higher, or 80 °C or higher. As described herein, the decomposition temperature is a value measured by thermogravimetric differential thermal analysis.

In one aspect, the phosphorus-containing organic substance is preferable in that separation of the coating film and the plated layer does not easily occur when plating is carried out.

Any known dispersant may be used as the dispersant. Examples thereof include polymers having a basic group such as a salt of a long-chain polyaminoamide and a polar acid ester, an unsaturated polycarboxylic acid polyaminoamide, a polycarboxylate of polyaminoamide, and a salt of a long-chain polyaminoamide and an acid polymer. Additional examples thereof include alkyl ammonium salts, amine salts, and amidoamine salts of polymers such as acrylic (co)polymers, modified polyester acids, polyether ester acids, polyether carboxylic acids, and polycarboxylic acids. Commercially available substances can be used for such a dispersant.

Commercially available products include, for example, DISPERBYK^{™}-101, DISPERBYK-102, DISPERBYK-110, DISPERBYK-111, DISPERBYK-112, DISPERBYK-118, DISPERBYK-130, DISPERBYK-140, DISPERBYK-142, DISPERBYK-145, DISPERBYK-160, DISPERBYK-161, DISPERBYK-162, DISPERBYK-163, DISPERBYK-2155, DISPERBYK-2163, DISPERBYK-2164, DISPERBYK-180, DISPERBYK-2000, DISPERBYK-2025, DISPERBYK-2163, DISPERBYK-2164, BYK-9076, BYK-9077, TERRA-204, and TERRA-U (manufactured by BYK), FLOREN DOPA-15B, FLOREN DOPA-15BHFS, FLOREN DOPA-22, FLOREN DOPA-33, FLOREN DOPA-44, FLOREN DOPA-17HF, FLOREN TG-662C, and FLOREN KTG-2400 (manufactured by Kyoeisha Chemical Co., Ltd.), ED-117, ED-118, ED-212, ED-213, ED-214, ED-216, ED-350, and ED-360 (manufactured by Kusumoto Chemicals, Ltd.), and PLYSURF M208F and PLYSURF DBS (manufactured by Daiichi Kogyo Seiyaku Co. Ltd.). These may be used singly, or a plurality thereof may be mixed and used.

The acid value (mgKOH/g) of the dispersant is preferably 20 or greater or 30 or greater, and is preferably 130 or less or 100 or less. When the acid range is within this range, dispersion stability of the dispersion is satisfactory, which is preferable. The acid value in the above range is particularly effective when the average particle size of the copper oxide is small. Specific examples preferably include "DISPERBYK-102" (acid value 101), "DISPERBYK-140" (acid value 73), "DISPERBYK-142" (acid value 46), "DISPERBYK-145" (acid value 76), "DISPERBYK-118" (acid value 36), and "DISPERBYK-180" (acid value 94), manufactured by BYK.

The difference ([amine value] - [acid value]) between the amine value (mgKOH/g) and the acid value is preferably -50 or greater and 0 or less. The amine value indicates the total amount of free bases and free base-derived sites, whereas the acid value indicates the total amount of free fatty acids and free fatty acid-derived sites. The amine value and the acid value are each measured by methods in accordance with JIS K 7700 or ASTM D2074. When the value of [amine value] - [acid value] is -50 or greater and 0 or less, the dispersion stability of the dispersion is excellent, which is preferable. The value of [amine value] - [acid value] is more preferably -40 or greater and 0 or less, and even more preferably -20 or greater and 0 or less.

The content of the dispersant should be proportional to the amount of copper oxide and adjusted in consideration of the required dispersion stability. The mass ratio (dispersant mass/copper oxide mass) of dispersant relative to the copper oxide in the dispersion is preferably 0.0050 or greater, 0.050 or greater, or 0.10 or greater, and is preferably 0.30 or less, 0.25 or less, or 0.23 or less. The amount of dispersant affects the dispersion stability of the dispersion. When the amount is small, the copper oxide tends to aggregate. When the amount is large, the dispersion stability of the dispersion tends to improve. However, when the content ratio of the dispersant in the dispersion is 35% or less, the effect of residue from the dispersant can be suppressed in the copper-containing film obtained after the plating step, and conductivity can be improved. In one aspect, the amount of dispersant in 100% by mass of the dispersion is preferably 0.5% by mass or greater, 0.8% by mass or greater, or 1.0% by mass or greater, and is preferably 35% by mass or less, 30% by mass or less, or 25% by mass or less.

### (Reductant)

In one aspect, the dispersion comprises a reductant. Examples of the reductant include hydrazine, sodium, sodium borohydride, potassium iodide, sulfite, sodium thiosulfate, formic acid, oxalic acid, ascorbic acid, iron(II) sulfide, tin(II) chloride, diisobutylaluminum hydride, and carbon. Hydrazine is preferable. The hydrazine may be in the form of hydrazine hydrate (i.e., the hydrazine of the present disclosure is a concept which also includes hydrazine hydrate). By including hydrazine in the dispersion, hydrazine contributes to the reduction of copper oxide, particularly cuprous oxide, in the plating step, and a reduced copper layer (as a copper-containing film) having a lower resistance can be formed. Hydrazine is also advantageous in maintaining the dispersion stability of the dispersion, and is preferable from the viewpoint of improving productivity during plating. The hydrazine in the dispersion may be present as a component in the copper oxide-containing particles and/or separately from the copper oxide-containing particles.

The content (amount excluding hydrated water in case of a hydrate) of the reductant in the dispersion should be proportional to the amount of copper oxide and adjusted in consideration of the required reducibility. In one aspect, the mass ratio (reductant mass/copper oxide mass) of reductant relative to the copper oxide in the dispersion is preferably 0.0001 or greater, and is preferably 0.1 or less, 0.05 or less, or 0.03 or less. When the mass ratio of the reductant is 0.0001 or greater, the dispersion stability of the dispersion is satisfactory and the reduced copper layer has a low resistance, which are preferable. When the mass ratio is 0.1 or less, the long-term stability of the dispersion is satisfactory.

Two or more dispersants may be combined. For example, when hydrazine and a reductant other than hydrazine are combined, the total content of hydrazine and the reductant other than hydrazine in the dispersion should be proportional to the amount of copper oxide and adjusted in consideration of the required reducibility. In one aspect, the total mass ratio (total reductant mass/copper oxide mass) of hydrazine and the reductant other than hydrazine relative to the copper oxide in the dispersion is preferably 0.0001 or greater, and is preferably 0.1 or less, 0.05 or less, or 0.03 or less. When the above total mass ratio of the reductant is 0.0001 or greater, the dispersion stability of the dispersion is satisfactory and the reduced copper layer has a low resistance, which are preferable. When the total mass ratio is 0.1 or less, the long-term stability of the dispersion is satisfactory.

The dispersion can be manufactured by mixing the components and carrying out a dispersion treatment using a mixer method, an ultrasonic method, a 3-roll method, a 2-roll method, an attritor, a homogenizer, a Banbury mixer, a paint shaker, a kneader, a ball mill, a sand mill, or an auto-revolving mixer. The viscosity of the dispersion can be designed according to the target application method. For example, the viscosity of a dispersion for screen printing is preferably 50 mPa•s or more, more preferably 100 mPa•s or more, and even more preferably 200 mPa•s or more, and is preferably 50000 mPa•s or less, more preferably 10000 mPa•s or less, and even more preferably 5000 mPa•s or less. Note that, the viscosity of a dispersion is a value measured at 23 °C using a cone-plate rotational viscometer.

### (Relationship between copper oxide and dispersant in dispersion)

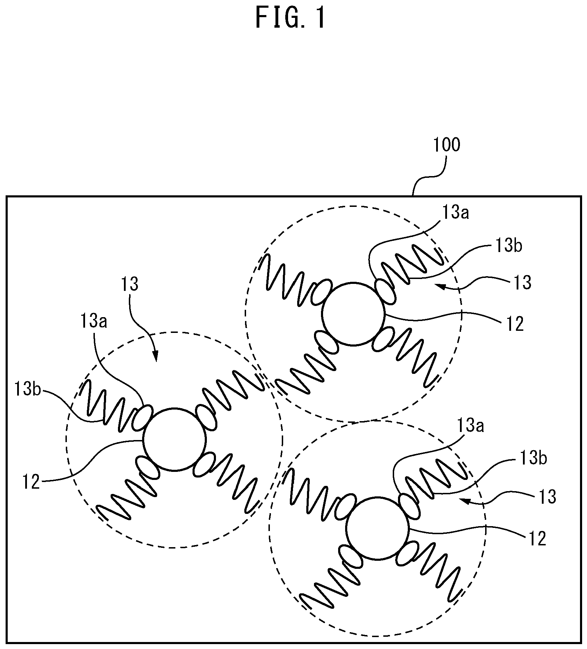

FIG. 1 is a cross-sectional schematic diagram illustrating the relationship between copper oxide and a phosphate ester salt in a dispersion (copper oxide ink) which can be used in one aspect of the present invention. Referring to FIG. 1, in one aspect of the present invention, when a copper oxide ink 100 comprises a copper oxide 12 and a phosphate ester salt 13 (an example of a phosphate ester as a dispersant), the copper oxide 12 is surrounded by the phosphate ester salt 13 with phosphorus 13a facing inward and the ester salt 13b facing outward. Since the phosphate ester salt 13 exhibits electrical insulation properties, electrical conduction between copper oxides 12 adjacent each other is blocked by the phosphate ester salt 13. Further, the phosphate ester salt 13 suppresses aggregation of the copper oxide ink 100 due to the steric hindrance effect. Although the copper oxide 12 is a semiconductor (i.e., has some degree of conductivity), since the copper oxide is covered by the phosphate ester salt 13, which exhibits electrical insulation properties, the copper oxide ink 100 exhibits electrical insulation properties.

When the copper oxide 12 is reduced to copper in a plating step, a conductive pattern region having excellent electrical conductivity is formed. Note that, when a phosphorus-containing organic substance is used as a dispersant, phosphorus remains in the conductive pattern region. The phosphorus is present at least as one of elemental phosphorus, a phosphorus oxide, and a phosphorus-containing organic substance. However, such residual phosphorus is normally segregated in the conductive pattern region, and thus there is no risk of increasing the resistance of the conductive pattern region.

### [Base material]

The base material used in the present embodiment has a surface on which a coating film is formed, and is exemplified by a substrate material of circuit board sheets for forming wiring patterns. The base material may be made of an inorganic material, an organic material, or a combination thereof. In one aspect, the base material has an adhesion layer.

Examples of the inorganic material include glasses such as soda lime glass, non-alkaline glass, borosilicate glass, and quartz glass; and ceramic materials such as alumina.

Examples of the organic material include paper materials such as celluloses and polymer materials such as resin films. Examples of the polymer material include polyimide (PI), polyesters (such as polyethylene terephthalate (PET), polyethylene naphthalate (PEN), and polybutylene terephthalate (PBT)), polyethersulfone (PES), polycarbonate (PC), polyvinyl alcohol (PVA), polyvinyl butyral (PVB), polyacetal (POM), polyarylate (PAR), polyamide (PA) (such as PA6 and PA66), polyamideimide (PAI), polyetherimide (PEI), polyphenylene ether (PPE), modified polyphenylene ether (m-PPE), polyphenylene sulfide (PPS), polyetherketone (PEK), polyphthalamide (PPA), polyethernitrile (PENt), polybenzimidazole (PBI), polycarbodiimide, silicone polymers (polysiloxanes), polymethacrylamide, nitrile rubber, acrylic rubber, polyethylene tetrafluoride, epoxy resins, phenolic resins, melamine resins, urea resins, polymethyl methacrylate resin (PMMA), polybutene, polypentene, ethylene-propylene copolymers, ethylene-butene-diene copolymers, polybutadiene, polyisoprene, ethylene-propylene-diene copolymers, butyl rubber, polymethylpentene (PMP), polystyrene (PS), styrene-butadiene copolymers, polyethylene (PE), polyvinyl chloride (PVC), polyvinylidene fluoride (PVDF), polyetheretherketone (PEEK), phenolic novolacs, benzocyclobutene, polyvinylphenol, polychloropyrene, polyoxymethylene, polysulfone (PSF), polyphenylsulfone resin (PPSU), cycloolefin polymer (COP), acrylonitrile-butadiene-styrene resin (ABS), acrylonitrile-styrene resin (AS), polytetrafluoroethylene resin (PTFE), and polychlorotrifluoroethylene (PCTFE). PI, PET, and PEN are particularly preferable from the viewpoints of flexibility and cost.

The base material may be, for example, a composite base material such as a glass composite base material or a glass epoxy base material, a Teflon^{™} base material, an alumina base material, a low-temperature co-fired ceramic (LTCC), or a silicon wafer.

The thickness of the base material is preferably 1 µm or more or 25 µm or more, and is preferably 10 mm or less or 250 µm or less. When the thickness of the base material is 250 µm or less, a fabricated electronic device is lightweight, space-saving, and flexible, and is thus preferable.

### [Formation of coating film]

As the application method of the dispersion, inkjet printing, screen printing, intaglio direct printing, intaglio offset printing, flexographic printing, or offset printing can be used. The application can be carried out using methods such as die coating, spin coating, slit coating, bar coating, knife coating, spray coating, and deep coating. The application method is preferably inkjet printing. An inkjet method does not require a printing plate and does not allow unnecessary components to adhere between wirings, and is thus excellent for migration resistance.

The layer thickness of a dried coating film is preferably 1 nm or more, 10 nm or more, or 100 nm or more, and is preferably 10000 nm or less, 8000 nm or less, or 7000 nm or less in terms of the ability to form a uniform conductive pattern.

The base material may have an adhesion layer (also referred to as an ink-receiving layer), and the coating film may be formed by printing the dispersion on the adhesion layer. The compound forming the adhesion layer (herein also referred to as "coating compound") preferably has a -OH group, and/or has an Ar-O structure and/or a M-O structure, wherein Ar represents an aromatic structure and M represents a metal atom. When the above adhesion layer is present, a layer comprising copper oxide-containing particles can be formed on the base material with good adhesion. Further, heat is not easily transmitted to the base material body, a resin having low heat resistance, such as a polyethylene terephthalate (PET) resin, can thereby be used as the base material body, which is advantageous in terms of versatility.

It is particularly preferable that the -OH group be an aromatic hydroxyl group (i.e., an -OH group constituting an -Ar-OH group) or a hydroxyl group bonded to a metal atom (i.e., an -OH group constituting a -M-OH group). -OH groups constituting -Ar-OH groups and -M-OH groups are highly active, and adhesion between the adhesion layer and the base material body, and/or adhesion between the layer containing copper oxide-containing particles and the adhesion layer tends to be excellent.

Examples of the aromatic structure (Ar) in the -Ar-OH group include divalent groups derived from aromatic compounds (i.e., two hydrogen atoms removed from these compounds), such as aromatic hydrocarbons such as benzene, naphthalene, anthracene, tetracene, pentacene, phenanthrene, pyrene, perylene, and triphenylene; and heteroaromatic compounds such as thiophene, thiazole, pyrrole, furan, pyridine, pyrazole, imidazole, pyridazine, pyrimidine, and pyrazine. The number of electrons contained in the π-electron system of the aromatic structure is preferably 22 or less, more preferably 14 or less, and even more preferably 10 or less. When the number of electrons contained in the π-electron system is 22 or less, crystallinity does not become excessively high, and a flexible and highly smooth adhesion layer is easily obtained. The aromatic structure may have a portion of the hydrogen atoms attached to the aromatic ring substituted by functional groups. Examples of the functional group can include halo group, alkyl group (such as methyl group, isopropyl group, and tertiary butyl group), aryl group (such as phenyl group and naphthyl group), heteroaromatic group (such as thienyl group), haloaryl group (such as pentafluorophenyl group, 3-fluorophenyl group, and 3,4,5-trifluorophenyl group), alkenyl group, alkynyl group, amide group, acyl group, alkoxy group (such as methoxy group), aryloxy group (such as phenoxy group and naphthoxy group), haloalkyl group (such as perfluoroalkyl group), thiocyano group, and hydroxyl group. A hydroxyphenyl group (-Ph-OH) is particularly preferable as the -Ar-OH group.

Examples of the metal atom (M) in the -M-OH group include those of silicon, silver, copper, aluminum, zirconium, titanium, hafnium, tantalum, tin, calcium, cerium, chromium, cobalt, holmium, lanthanum, magnesium, manganese, molybdenum, nickel, antimony, samarium, terbium, tungsten, yttrium, zinc, and indium. When the adhesion layer requires insulation properties, a -Si-OH group or a -Zr-OH group is preferable. When the adhesion layer requires conductivity, a -Ti-OH group or a -Zr-OH group is preferable.

The aromatic structure (Ar) in the Ar-O structure may be a structure obtained by removing one or more hydrogen atoms from the same aromatic compound as the aromatic compound exemplified for the above -Ar-OH group. The Ph-O structure is particularly preferable as the Ar-O structure.

The same metal atoms as those exemplified for the -M-OH group can be used as the metal atom in the M-O structure. The Si-O structure, Ti-O structure, Zn-O structure, and Zr-O structure are particularly preferable.

Examples of the coating compound having a Si-O structure include silica-based compounds (for example, silicon dioxide (SiO₂)) and silicone-based compounds (for example, polysiloxanes, alkylpolysiloxanes, and dimethylpolysiloxanes).

Examples of the coating compound include materials such as polyimide, polyesters (such as polyethylene terephthalate (PET), polyethylene naphthalate (PEN), and polybutylene terephthalate (PBT)), polyethersulfone (PES), polycarbonate (PC), polyvinyl alcohol (PVA), polyvinyl butyral (PVB), polyarylate (PAR), polyamide (PA), polyamideimide (PAI), polyetherimide (PEI), polyphenylene ether (PPE), polyphenylene sulfide (PPS), polyetherketone (PEK), polyphthalamide (PPA), polyethernitrile (PENt), polybenzimidazole (PBI), polycarbodiimide, silicon polymers (polysiloxanes), polymethacrylamide, nitrile rubber, acrylic rubber, polyethylene tetrafluoride, epoxy resins, phenolic resins, melamine resins, urea resins, polymethyl methacrylate resin (PMMA), polybutene, polypentene, ethylene-propylene copolymers, ethylene-butene-diene copolymers, polybutadiene, polyisoprene, polychloroprene, ethylene-propylene-diene copolymers, nitrile rubber, chlorosulfonated polyethylene, acrylic rubber, epichlorohydrin rubber, urethane rubber, butyl rubber, fluororubber, polymethylpentene (PMP), polystyrene (PS), styrene-butadiene copolymers, polyethylene (PE), polyvinyl chloride (PVC), polyvinylidene fluoride (PVDF), polyetheretherketone (PEEK), phenolic novolac resins, benzocyclobutene, polyvinylphenol, polychloropyrene, polyoxymethylene, and polysulfone (PSF), into which one or more of the above -OH group, Ar-O structure, and M-O structure are introduced. Phenolic resins, phenolic novolac resins, polyvinylphenol, and polyimide are particularly preferable as the coating compound.

The upper limit value of the thickness of the adhesion layer is not particularly limited, but is preferably 20 µm or less, more preferably 5 µm or less, and even more preferably 1 µm or less. The lower limit value is preferably 0.01 µm or more, more preferably 0.05 µm or more, and even more preferably 0.2 µm or more.

### <Drying step>

An aspect of the method of the present disclosure may further comprise a drying step of drying a coating film between the coating film formation step and the plating step. In the drying step, a coating film obtained in the coating film formation step is dried. The drying step is a step for vaporizing the dispersion medium. The dispersion medium may be vaporized at room temperature, or may be vaporized by a method such as an oven or vacuum drying. When considering the heat resistance of the base material, drying at a temperature of 150 °C or lower is preferable, and drying at a temperature of 100 °C or lower is more preferable. Nitrogen or hydrogen-mixed nitrogen (for example, a mixed gas containing about 3% by volume of hydrogen in a total of 100% by volume of hydrogen and nitrogen) may be introduced during drying.

### <Reduction step>

An aspect of the method of the present disclosure may comprise a reduction step before the plating step. In the reduction step, a copper-containing film is obtained by reducing a copper oxide-containing film, which is a coating film that has or has not undergone the drying step. In the present step, copper oxide-containing particles in the copper oxide-containing film are reduced to generate copper, and the copper itself is fused and integrated to form a copper-containing film (reduced copper layer). However, when the copper oxide-containing particles are plated as-is, the present step may be omitted. Examples of the reduction method include a method of reducing at a temperature of 100 °C or higher and 500 °C or lower in a nitrogen atmosphere, a method of reducing at a temperature of 100 °C or higher and 500 °C or lower in a hydrogen-mixed nitrogen (a mixed gas containing about 3% by volume of hydrogen in a total of 100% by volume of hydrogen and nitrogen), and a method of immersing the copper oxide-containing film in a reducing solution (i.e., wet reduction). In one aspect, the reduction step is a step of immersing the copper oxide-containing film in a reducing solution, i.e., a wet reduction step.

The reducing solution comprises a reductant. The reductant may be inorganic or organic. Examples of the inorganic reductant include sodium borohydride, sulfur dioxide, sodium nitrite, metallic aluminum, cerium chloride, and sodium thiosulfate. Examples of the organic reductant include hydrazine, formaldehyde, methanol, critic acid and salts thereof, oxalic acid and salts thereof, formic acid and salts thereof, glycerin, glucose, ethylene glycol, glycine compounds (herein also simply referred to a glycine compound) represented by the following formula (2):

(R¹)₂N-C-COOR² (2)

wherein R¹ and R² are each independently hydrogen or a monovalent group, and the plurality of R¹ in the formula may be the same as or different from each other, L-ascorbic acid and salts thereof, thioglycolic acid, hydroxylamine hydrochloride, hydroquinone, hydrosulfite, erythorbic acid, erythorbate, thiourea, tin-based reductants, iron-based reductants, and zinc-based reductants.

The glycine compound represented by the above formula (2) is glycine or a derivative thereof. Examples of the glycine derivative include N-[N-(benzyloxycarbonyl)glycyl]-L-proline, N-carbobenzoxyglycine 4-nitrophenyl, L-(2-chlorophenyl)glycine chloride, BOC-NA-methyl-L-phenylglycine, ethyl acetylamino(cyano)acetate, xylenol orange, D-(-)-2-(2,5-dihydrophenyl)glycine, Cbz-cyclohexyl-L-glycine, (R)-α-[(3-ethoxy-1-methyl-3-oxo-1-propenyl)amino]benzene potassium acetate, N-(diphenylmethylene)glycine tert-butyl, D-propargylglycine, (S)-α-amino-4-fluorobenzeneacetic acid, N-(tert-butoxycarbonyl)-L-2-cyclohexylglycine, methyl glycine hydrochloride, D-2-allylglycine hydrochloride, (S)-2-cyclohexyl-2-aminoacetic acid, (2S)-N[[(carboxymethyl)aminocarbonyl]methyl]-2-amino-4-methylpentanamide, (R)-2-amino-4-pentynoic acid, (R)-N-BOC-propargylglycine, N-benzylglycine, (S)-N-BOC-α-allylglycine dicyclohexylamine, BOC-D-cyclopropylglycine, N-(tert-butoxycarbonyl)-D-2-phenylglycine, (R)-(-)-N-(3,5-dinitrobenzoyl)-α-phenylglycine, L-2-chlorophenylglycine, 4-fluoro-D-phenylglycine, BOC-L-cyclopropylglycine, glycinebenzyl p-toluenesulfonate, (S)-N-BOC-allylglycine, (R)-N-BOC-allylglycine, (R)-4-hydroxy-α-[(3-methoxy-1-methyl-3-oxo-1-propenyl)amino]benzene potassium acetate, N-[(9H-fluoren-9-ylmethoxy)carbonyl]-D-2-phenylglycine, DL-leucylglycylglycine, glycylglycylglycine, N-(tert-butoxycarbonyl)-L-propargylglycine, 2-amino-2-[3-(trifluoromethyl)phenyl]acetic acid, (S)-N-BOC-3-hydroxyadamantylglycine, N-[tris(hydroxymethyl)methyl]glycine, 2-propargyl-L-glycine, N-(triphenylmethyl)glycine, N-benzylglycineethyl, 2-(2-oxo-2-hydroxyethylamino)benzoic acid, FMOC-D-allylglycine, L-2-(4-chlorophenyl)glycine, D-2-cyclohexylglycine, N,N-di(2-hydroxyethyl)glycine, N-(benzyloxycarbonyl)-D-phenylglycine, N-[(9H-fluroen-9-ylmethoxy)carbonyl]-L-2-phenylglycine, benzyloxycarbonylamino(dimethoxyphosphinyl)methyl acetate, N-(tert-butoxycarbonyl)glycinemethyl, 4-(trifluoromethyl)phenylglycine, glycyl-DL-leucine, N-tosylglycine, N-(tert-butoxycarbonyl)-D-2-cyclohexylglycine, N-formylglycine, NT-butylglycine HCL, (R)-2-allylglycine, H-glycine benzyl ester hydrochloride, N-carbobenzoxy-L-2-phenylglycine, (diphenylmethyleneamino)ethyl acetate (diphenylmethyleneamino)ethyl acetate, oxphenicine, L-methionylglycine, (4-hydroxyphenyl)(amino)acetic acid, (R)-α-aminobenzene methyl acetate hydrochloride, L-A-cyclopropylglycine, N-benzylglycine hydrochloride, D-cyclopropylglycine, α-amino-4-fluorobenzeneacetic acid, glycine tert-butyl hydrochloride, N-(tert-butoxycarbonyl)-2-phosphonoglycine trimethyl, N-[(9H-fluoren-9-ylmethoxy)carbonyl]glycine, N-(4-hydroxyphenyl)glycine, DL-2-(4-chlorophenyl)glycine, L-A-cyclohexylglycine, ethyl glycine hydrochloride, N-[(methoxycarbonyl)methyl]carbamate benzyl, DL-2-(2-chlorophenyl)glycine, L-cyclopentylglycine, N-BOC-2-(4'-chlorophenyl)-D-glycine, BOC-L-cyclopentylglycine, D-(2-chlorophenyl)glycine chloride, N-phthaloylglycine, N-formylglycine ethyl, N-(tert-butoxycarbonyl)-L-2-phenylglycine, N-(tert-butoxycarbonyl)glycine, N-(2-aminoethyl)glycine, N-phenylglycine, N,N-dimethylglycine hydrochloride, (S)-N-FMOC-allylglycine, D-(-)-2-(4-hydroxyphenyl)glycine, L(+)-2-phenylglycine methyl ester hydrochloride, trisodium edetate, N-(tert-butoxycarbonyl)glycylglycine, ethyl (2R)-2-amino-2-phenylacetate/hydrochloride, ethyl N-acetylglycine, L-leucylglycine hydrate, and L-2-allylglycine hydrochloride.

In the above formula (2), R¹ is preferably a monovalent group having one or more hydroxy groups and 1 to 4 carbon atoms.

In the above formula (2), R² is preferably hydrogen or a hydrocarbon group having 1 to 3 carbon atoms.

A compound having a structure that has two or more intramolecular hydroxy groups is suitable as the glycine derivative. The use of a glycine derivative having two or more hydroxyl groups is advantageous in that the rate of the subsequent plating step can be increased and separation of the film does not easily occur during the step. Suitable examples of the compound having a structure that has two or more intramolecular hydroxy groups are N,N-di(2-hydroxyethyl)glycine and N-[tris(hydroxymethyl)methyl]glycine.

When the reduction step is a wet reduction step, the reductant concentration in the reducing solution, from the viewpoint of enabling stable reduction at a satisfactory reduction rate, may be, for example, 1.0 g/L or more, 3.0 g/L or more, 5.0 g/L or more, or 10.0 g/L or more, and may be, for example, 600 g/L or less, 570 g/L or less, 550 g/L or less, 520 g/L or less, or 500 g/L or less.

From the viewpoint of enabling stable reduction with a satisfactory reduction rate, the reductant concentration in the reducing solution may be, for example, 0.1% by mass or greater, 0.3% by mass or greater, 0.5% by mass or greater, or 1.0% by mass or greater, and may be, for example, 60% by mass or less, 57% by mass or less, 55% by mass or less, 52% by mass or less, or 50% by mass or less.

In one aspect, the reducing solution comprises a glycine compound represented by the above formula (2). The concentration of the glycine compound in the reducing solution is preferably 1% by mass or greater, 8% by mass or greater, or 16% by mass or greater, and is preferably 50% by mass or less or 32% by mass or less.

In a typical aspect, the reducing solution comprises a solvent. The solvent system may be water-based or organic solvent-based. Examples of the solvent include water, ethanol, 1-butanol, 2-propanol, toluene, hexane, benzene, chloroform, methylene chloride, acetic acid, ethyl acetate, tetrahydrofuran, acetone, acetonitrile, N,N-dimethylformamide, and dimethylsulfoxide. Ethanol, 1-butanol, and 2-propanol are particularly preferable from the viewpoint of reusability.

The solvent in the reducing solution is particularly preferably water, and from the viewpoint of cost and productivity, a combination of a glycine compound and water is particularly preferable. The reducing solution is particularly preferably an aqueous solution having a glycine compound concentration of 1% by mass or greater and 50% by mass.

In one aspect, the reducing solution preferably comprises N,N-di(2-hydroxyethyl)glycine and/or citric acid from the viewpoint of productivity, specifically the viewpoint of accelerating reduction. Particularly when N,N-di(2-hydroxyethyl)glycine, copper in the reducing solution becomes divalent and forms a complex with glycine, which is preferable in that reduction of copper oxide to copper is promoted.

During the reduction, it is preferable to immerse the costing film while stirring so that the reductant concentration in the reducing solution is constant.

The reducing solution preferably comprises at least a predetermined amount of copper ions and/or copper oxide, whereby the coating film can be prevented from falling off during wet reduction. The copper ion concentration, the copper oxide concentration, or the total concentration of copper ions and copper oxide in the reducing solution is preferably 1% by mass or greater or 5% by mass or greater, and is preferably 99% by mass or less or 90% by mass or less. In one aspect, copper ions and/or copper oxide may be contained in a reducing solution by adding one or more selected from the group consisting of copper acetate, copper chloride, copper oxide, metallic copper, and the dispersion comprising copper oxide-containing particles of the present disclosure to a solvent to prepare the reducing solution. In one aspect, copper oxide may be contained in the reducing solution by dispersing copper oxide from the coating film in the solvent.

The temperature of the wet reduction step is preferably 20 °C or higher, more preferably 30 °C or higher and even more preferably 40 °C or higher from the viewpoint of productivity, so that the reduction proceeds quickly. The temperature is preferably 100 °C or lower and more preferably 90 °C or lower from the viewpoint of obtaining a uniform copper-containing film.

The wet reduction step can be carried out simultaneously with electroless plating in the plating step. From the viewpoint of improving productivity, it is preferable that the wet reduction step and the plating step be carried out simultaneously. Specifically, the wet reduction step and the plating step can be carried out simultaneously by including a reductant in the plating solution described below. In this case, it is preferable that the solvent amount be adjusted so that the reductant concentration and the plating material concentration (copper concentration in one aspect) fall within the range exemplified for the reducing solution and plating solution in the present disclosure.

### <Washing step>

When carrying out wet reduction, a suitable cleaning solution may be used to remove unreduced portions and the reducing solution after the wet reduction, whereby a clean reduced region remains on the base material. On the other hand, a washing step may not be carried out. In either case, a base material (hereinafter also referred to as conductive base material) imparted with conductivity by the reduced region as a conductive pattern is obtained. However, when copper oxide-containing film is plated as-is, the present step may be omitted.

A liquid that disperses or dissolves copper oxide can used as a cleaning solution when washing. Specific examples thereof include solvents such as water, propylene glycol monomethyl ether acetate, 3-methoxy-3-methyl-butyl acetate, ethoxyethyl propionate, propylene glycol monomethyl ether, propylene glycol monoethyl ether, propylene glycol monopropyl ether, propylene glycol tertiary butyl ether, dipropylene glycol monomethyl ether, ethylene glycol butyl ether, ethylene glycol ethyl ether, ethylene glycol methyl ether, ethylene glycol, 1,2-propylene glycol, 1,3-butylene glycol, 2-pentanediol, 2-methylpentane-2,4-diol, 2,5-hexanediol, 2,4-heptanediol, 2-ethylhexane-1,3-diol, diethylene glycol, hexanediol, octanediol, triethylene glycol, tri-1,2-propylene glycol, glycerol, ethylene glycol monohexyl ether, diethylene glycol monoethyl ether, diethylene glycol monobutyl ether, ethylene glycol monobutyl acetate, diethylene glycol monoethyl ether acetate, methanol, ethanol, n-propanol, i-propanol, n-butanol, i-butanol, 2-butanol, t-butanol, n-pentanol, i-pentanol, 2-methylbutanol, 2-pentanol, t-pentanol, 3-methoxybutanol, n-hexanol, 2-methylpentanol, 1-hexanol, 2-hexanol, 2-ethylbutanol, 1-heptanol, 2-heptanol, 3-heptanol, n-octanol, 2-ethylhexanol, 2-octanol, n-nonyl alcohol, 2,6-dimethyl-4-heptanol, n-decanol, cyclohexanol, methylcyclohexanol, 3,3,5-trimethylcyclohexanol, benzyl alcohol, diacetone alcohol, and acetone. Particularly, when the coating film comprises a dispersant, the above solvent can satisfactorily wash off the copper oxide and is thus suitable. It is particularly preferable that the solvent be water, ethanol, butanol, i-propanol, and acetone. Note that, the above cleaning solution may comprise a dispersant in addition to a solvent. As the dispersant, those previously described can be used, and a phosphorus-containing organic substance is more preferable.

### <Delipidation step>

An aspect of the method of the present disclosure may have a step of delipidating the copper oxide-containing film or copper-containing film before the plating step. In one aspect, productivity can be improved by directly delipidating the copper oxide without reduction. In another aspect, the copper oxide may be reduced (for example, in the reduction step previously described) and then delipidated. Examples of the delipidation method include a UV method and a wet delipidation method. Because of the delipidation step, the growth rate of the subsequent plating is increased and productivity is improved. Further, the present step contributes to the decrease in porosity of the conductive layer (i.e., the plated layer and additionally, in an aspect in which the copper oxide in the copper oxide-containing film is reduced, the reduced copper layer) after plating, specifically the porosity of the final conductive layer. Note that, delipidation may be carried out with electroless plating, and the delipidation step may be omitted in this case.

From the viewpoint of interlayer adhesion of the conductive pattern-provided structure, the delipidation step is preferably carried out by immersing the copper oxide-containing film or copper-containing film in a delipidating solution comprising a compound comprising an amino group. Examples of the compound comprising an amino group include amino acids such as alanine, arginine, asparagine, cysteine, glutamine, glycine, histidine, isoleucine, leucine, lysine, methionine, phenylalanine, proline, serine, threonine, tryptophan, tyrosine, and valine; alkylamines such as methylamine, dimethylamine, ethylamine, trimethylamine, diethylamine, triethylamine, propylamine, isopropylamine, and diisopropylamine; alkanolamines such as 2-aminoethanol, diethanolamine, triethanolamine, N-methylethanolamine, and N,N-dimethylethanolamine; polyamines such as ethylenediamine, diethylenetriamine, tetraethylenepentamine, tris(hydroxymethyl)aminomethane, m-xylylenediamine, p-xylylenediamine, and 1,3-bis(aminomethyl)cyclohexane; aminosulfonic acids such as taurine; aminothiols such as 2-aminoethanethiol; and nitrogen-containing heterocyclic compounds such as 3-picolylamine and 3-pyridinemethanol. From the viewpoint of contributing to the plating growth rate, 2-aminoethanol is particularly preferable.

The delipidating solution may be a commercially available product. Specific examples thereof include ALC-009 (comprising 2-aminoethanol as a compound having an amino group) available from C. Uyemura & Co., Ltd.; and Cleaner Securigant 902 (comprising 2-aminoethanol as a compound having an amino group) available from Atotech Japan.

The concentration of the compound comprising an amino group in the delipidating solution is preferably 5 mmol/L or more, more preferably 10 mmol/L or more, and more preferably 20 mmol/L or more from the viewpoint of removing substances inhibiting the plating reaction. From the viewpoint of promoting the plating reaction, the concentration is preferably 100 mmol/L or less, more preferably 90 mmol/L or less, and more preferably 80 mmol/L or less.

The immersion time of the copper oxide-containing film or copper-containing film in the delipidating solution is preferably 1 min or more and more preferably 2 min or more, from the viewpoint of contributing to the plating growth rate. From the viewpoint of decreasing damage to the base material, the immersion time is preferably 15 min or less and more preferably 10 min or less. Immersion under stirring is preferable from the viewpoint of uniform delipidation.

The immersion temperature is preferably 15 °C or higher, more preferably 30 °C or higher, and even more preferably 40 °C or higher to enhance the effect of promoting plating growth rate. From the viewpoint of decreasing damage to the base material, the immersion temperature is preferably 70 °C or lower and more preferably 60 °C or lower.

### <Plating step>

In one aspect of the present invention, electroless plating is carried out on a copper oxide-containing film or copper-containing film as a coating film that has or has not undergone a drying step, a reduction step, and/or a delipidation step (in one aspect, a coating film that has or has not undergone a wet reduction step and/or a delipidation step after the drying step). In one aspect, the copper oxide-containing film is directly plated without reduction, whereby productivity can be improved. Electroless plating may reduce a portion or all of the copper oxide in the copper oxide-containing film, or may not reduce the copper oxide. In another aspect, electroless plating is carried out on a copper-containing film obtained by reduction (for example, wet reduction) of the copper oxide-containing film, whereby conductivity can be improved. A conductive pattern made of copper oxide and/or copper reduced therefrom and a plated layer can be formed by electroless plating, and a conductive pattern-provided structure can thereby be manufactured. Electroless plating is advantageous from the viewpoint of wide applicability to patterns. As the plating method, a general electroless plating method may be applied. For example, electroless plating may be carried out with a delipidation step or a washing step.

A plating solution is used for electroless plating. Since a copper oxide-containing film or a copper-containing film (particularly, a copper oxide-containing film or a copper-containing film as a coating film after the drying step) easily separates due to external stress, when plating deposition varies and stress concentrates in one portion, separation of the copper oxide-containing film or copper-containing film may occur during the plating step. In one aspect, the plating solution contains EDTA (ethylenediaminetetraacetic acid). EDTA functions as a complexing agent and forms a highly stable complex with copper ions. This is considered to contribute to the prevention of separation of the copper oxide-containing film or copper-containing film by suppressing side reactions in the plating bath, stabilizing the bath, and promoting uniform plating deposition. Therefore, the use of a plating solution comprising EDTA contributes to the production of a conductive pattern-provided structure having excellent interlayer adhesion. Further, EDTA is stable even in a high-temperature liquid, and thus contributes to increasing the plating rate when a plating solution comprising EDTA is used under heating (for example, 30 °C or higher). It is particularly preferable to carry out plating with a plating solution comprising EDTA (ethylenediaminetetraacetic acid) after wet reduction, since the growth of copper plating is promoted and productivity is improved. The amount of EDTA in the plating solution is preferably 7 g/L or more, 10 g/L or more, or 15 g/L or more from the viewpoint of satisfactorily obtaining the advantages of EDTA, and is preferably 50 g/L or less, 45 g/L or less, or 40 g/L or less from the viewpoints of decreasing impurities in the plating deposit and lowering electrical resistance.

In a typical aspect, the plating solution comprises a copper ion source and a reductant. The copper ion source may be present as ions in the solution. For example, the copper oxide-containing film or the copper-containing film may be immersed in the plating solution while air bubbling is carried out. Copper ions in the plating solution are reduced by electroless plating, and copper is deposited on the surface of the copper oxide-containing film or the copper-containing film to form a plated copper layer. In the electroless plating, a portion or all of the copper oxide in the copper oxide-containing film may or may not be reduced by the plating solution, and a plated copper layer is therefore formed on a layer comprising copper oxide and/or copper.

The copper concentration of the plating solution, from the viewpoint of improving the rate of plating, is preferably 1.5 g/L or more, 1.8 g/L or more, or 2.0 g/L or more, and from the viewpoint of uniformity of the plating film, is preferably 5.0 g/L or less, 4.0 g/L or less, 3.5 g/L or less, or 3.0 g/L or less. Particularly, when wet reduction and plating are combined, the copper concentration of the plating solution is preferably 1.8 g/L or more and 3.5 g/L or less.

CuSO₄, CuCl₂, CuCl, CuNO₃, and Cu₃(PO₄)₂ can be exemplified as the copper ion source contained in the plating solution. From the viewpoint of forming a plated layer having excellent adhesion, CuCl₂ and CuSO₄ are preferable.

The plating solution may comprise one or more selected from the group of consisting formaldehyde (CH₂O), potassium tetrahydrochloride, dimethylamine borane, glyoxylic acid, and phosphinic acid as the reductant. The amount of reductant in the plating solution is preferably 0.1 g/L or more, 0.5 g/L or more, or 1.0 g/L or more, and is preferably 15.0 g/L or less, 12.0 g/L or less, or 9.0 g/L or less.

The plating solution may further comprise an additional complexing agent in addition to EDTA (ethylenediaminetetraacetic acid). Examples of the additional complexing agent include Rochelle salt, triethanolamine, ammonium sulfate, citric acid, and glycine. The amount of the additional complexing agent in the plating solution is preferably 5 g/L or more, 7 g/L or more, or 10 g/L or more, and is preferably 50 g/L or less, 45 g/L or less, or 40 g/L or less.

The plating solution may further comprise a surfactant, as desired.

The plating solution may be a commercially available product. Commercially available products such as Thru-Cup ELC-SP available from C. Uyemura & Co., Ltd.; Melplate CU-390 and Melplate CU-5100P available from Meltex, Inc.; OPC Copper NCA available from Okuno Chemical Industries Co., Ltd.; C4500 available from Rohm and Haas Company; Printganth UPlus available from Atotech; and Cu-510 available from MacDermid Performance Solutions Japan K.K. can be used

The temperature of the electroless plating bath of the plating solution is preferably 25 °C or higher, 30 °C or higher, or 35 °C or higher, and is preferably 80 °C or lower, 70 °C or lower, or 65 °C or lower, since faster plating growth can be expected. The plating time is preferably 5 min or more or 10 min or more, and is preferably 60 min or less, 50 min or less, or 40 min or less.

The layer thickness of the plated layer (plated copper layer in one aspect) in terms of facilitating current flow required for the conductive pattern-provided structure is preferably 300 nm or more, 500 nm or more, 1 µm or more, or 2 µm or more, and is preferably 100 µm or less, 50 µm or less, or 30 µm or less.

In one aspect, electroless plating may be carried out followed by electroplating. A general electroplating method can be applied to the electroplating. For example, an electrode and a conductive base material to be plated are placed in a solution (plating bath) comprising copper ions. A direct current is applied between the electrode and the conductive base material from an external DC power supply. In one aspect, a current can be applied to the reduced copper layer on the conductive base material by connecting a jig (for example, a clip) connected to one of the electrode pair of the external DC power supply to the reduced copper layer. As a result, copper is deposited on the surface of the reduced copper layer on the conductive base material by the reduction of copper ions to form a plated copper layer.

As the electroplating bath, for example, a copper sulfate bath, a copper borofluoride bath, a copper cyanide bath, or a copper pyrophosphate bath can be used. From the viewpoints of safety and productivity, a copper sulfate bath and a copper pyrophosphate bath are preferable.

As the copper sulfate plating bath, for example, a sulfuric acid acidic copper sulfate plating bath containing copper sulfate pentahydrate, sulfuric acid, and chlorine is preferably used. The concentration of copper sulfate pentahydrate in the copper sulfate plating bath is preferably 50 g/L or more or 100 g/L or more, and is preferably 300 g/L or less or 200 g/L or less. The concentration of sulfuric acid is preferably 40 g/L or more or 80 g/L or more, and is preferably 160 g/L or less or 120 g/L or less. The solvent of the plating bath is normally water. The temperature of the plating bath is preferably 20 °C or higher or 30 °C or higher, and is preferably 60 °C or lower or 50 °C or lower. The current density during electrolytic treatment is preferably 1 A/dm² or more or 2 A/dm² or more, and is preferably 15 A/dm² or less or 10 A/dm² or less.

As the copper pyrophosphate plating bath, for example, a plating bath containing copper pyrophosphate and potassium pyrophosphate is suitable. The concentration of copper pyrophosphate in the copper pyrophosphate plating bath is preferably 60 g/L or more or 70 g/L or more, and is preferably 110 g/L or less or 90 g/L or less. The concentration of potassium pyrophosphate is preferably 240 g/L or more or 300 g/L or more, and is preferably 470 g/L or less or 400 g/L or less. The solvent of the plating bath is normally water. The pH of the plating bath is preferably 8.0 or greater or 8.2 or greater, and is preferably 9.0 or less or 8.8 or less. Ammonia water may be added to adjust the pH value. The temperature of the plating bath is preferably 20 °C or higher or 30 °C or higher, and is preferably 60 °C or lower or 50 °C or lower. The current density during electrolytic treatment is preferably 0.5 A/dm² or more or 1 A/dm² or more, and is preferably 10 A/dm² or less or 7 A/dm² or less.

The plating bath for electroplating may further comprise a surfactant.

### <Suitable example of method for manufacturing structure with conductive pattern>

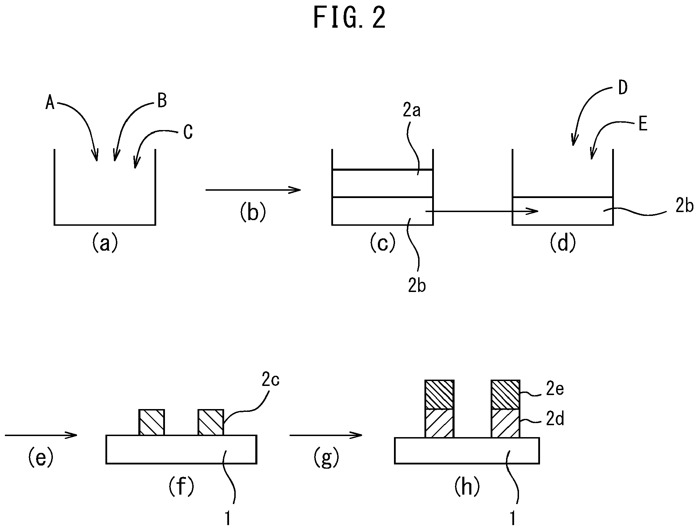

Hereinafter, a more specific and suitable example of the method for manufacturing a conductive pattern-provided structure will be described with reference to FIG. 2.

Copper acetate B is first dissolved in a mixed solvent A of water and propylene glycol (PG) and added to hydrazine C and stirred (FIG. 2(a)).

The product solution (supernatant 2a) and cuprous oxide (precipitate 2b) are then subjected to solid-liquid separation (FIG. 2(c)) by centrifugation (FIG. 2(b)).

A dispersant D and an alcohol E are then added to the precipitate 2b to disperse the precipitate to obtain a dispersion comprising a copper oxide (FIG. 2(d)).

The dispersion containing a copper oxide is then printed on a base material by an inkjet method or a gravure printing method (FIG. 2(e)) to form a coating film, followed by drying. As a result, a copper oxide-containing film (copper oxide layer) 2c comprising a copper oxide and a dispersant is formed on the base material 1 (FIG. 2(f)).

The copper oxide-containing film is then immersed in a delipidating solution comprising a compound comprising an amino group to carry out a delipidation step, followed by a plating step (FIG. 2(g)). Note that the delipidation step may be omitted. A portion or all of the copper oxide in the copper oxide layer may be reduced in the plating step. As a result, a layer 2d of copper oxide and/or copper (i.e., a reduced product of copper oxide) and a plated copper layer 2e are formed on the base material 1 (FIG. 2(h)).

A conductive pattern-provided structure can be manufactured by the above procedure.

According to the method of the present disclosure as described above, since the conductive layer can be produced at a very low cost and with low energy, the conductive pattern-provided structure can be manufactured more easily.

### <Formation of additional layers>

The conductive pattern-provided structure of the present disclosure may have additional layers in addition to the base material and the conductive layer previously described. The additional layers can be exemplified by a resin layer and a solder layer.

### [Resin layer]

In one aspect, a portion of the conductive layer is preferably covered with a resin layer. By covering a portion of the conductive layer with a resin layer, oxidation of the conductive pattern is prevented and reliability is improved. Since a portion of the conductive layer is not covered by a resin layer, components can be electrically joined thereto.

One example of the resin layer is an encapsulant layer. The resin layer can be formed by, for example, transfer molding or compression molding. Examples of a usable resin include polyethylene (PE), polypropylene (PP), polyimide (PI), polyesters (such as polyethylene terephthalate (PET), polyethylene naphthalate (PEN), and polybutylene terephthalate (PBT)), polyethersulfone (PES), polycarbonate (PC), polyvinyl alcohol (PVA), polyvinyl butyral (PVB), polyacetal (POM), polyarylate (PAR), polyamide (PA) (such as PA6 and PA66), polyamideimide (PAI), polyetherimide (PEI), polyphenylene ether (PPE), modified polyphenylene ether (m-PPE), polyphenylene sulfide (PPS), polyetherketone (PEK), polyetheretherketone (PEEK), polyphthalamide (PPA), polyethernitrile (PENt), polybenzimidazole (PBI), polycarbodiimide, silicone polymers (polysiloxanes), polymethacrylamide, nitrile rubber, acrylic rubber, polyethylene tetrafluoride, epoxy resins, phenolic resins, melamine resins, urea resins, polymethyl methacrylate resin (PMMA), polybutene, polypentene, ethylene-propylene copolymers, ethylene-butene-diene copolymers, polybutadiene, polyisoprene, ethylene-propylene-diene copolymers, butyl rubber, polymethylpentene (PMP), polystyrene (PS), styrene-butadiene copolymers, polyvinyl chloride (PVC), polyvinylidene fluoride (PVDF), phenolic novolacs, benzocyclobutene, polyvinylphenol, polychloropyrene, polyoxymethylene, polysulfone (PSF), polyphenylsulfone resin (PPSU), cycloolefin polymer (COP), acrylonitrile-butadiene-styrene resin (ABS), acrylonitrile-styrene resin (AS), polytetrafluoroethylene resin (PTFE), and polychlorotrifluoroethylene (PCTFE). The thickness of the resin layer is preferably 0.1 µm or more or 0.5 µm or more, and is preferably 1 mm or less or 800 µm or less.

The encapsulant layer protects the conductive pattern from external stress in the finished product (the conductive pattern-provided structure and a product comprising the same), and can improve long-term stability of the conductive pattern-provided structure.

From the viewpoint of ensuring satisfactory long-term stability, the moisture permeability of the encapsulant layer, which is an example of the resin layer, is preferably 1.0 g/m²/day or less, more preferably 0.8 g/m²/day or less, and even more preferably 0.6 g/m²/day or less. By lowering the moisture permeability, moisture can be prevented from entering the encapsulant layer from the outside, and oxidation of the conductive pattern can be suppressed. A lower moisture permeability is preferable. The above moisture permeability is a value measured by the cup method.

The encapsulant layer can be a functional layer imparting an oxygen barrier function to the conductive pattern-provided structure after peeling off an oxygen barrier layer that may be used during manufacturing. Other functions may include scratch resistance when handling the conductive pattern-provided structure, antifouling properties for protecting the conductive pattern-provided structure from outside contamination, and rigidity improvement for the conductive pattern-provided structure when a tough resin is used.

### [Solder layer]

In one aspect, it is preferable that a solder layer be formed on a portion of the conductive layer on the side opposite the base material side. A solder layer can connect the conductive layer to another member. The solder layer can be formed by, for example, a reflow method. The solder layer may be a Sn-Pb-based, Pb-Sn-Sb-based, Sn-Sb-based, Sn-Pb-Bi-based, Bi-Sn-based, Sn-Cu-based, Sn-Pb-Cu-based, Sn-In-based, Sn-Ag-based, Sn-Pb-Ag-based, or Pb-Ag-based solder layer. The thickness of the solder layer is preferably 0.1 µm or more or 0.5 µm or more, and is preferably 2 mm or less or 1 mm or less.

### <Conductive pattern structure manufacturing kit>

One aspect of the present disclosure provides a conductive pattern structure manufacturing kit comprising at least two of the dispersion of the present disclosure, the plating solution of the present disclosure, and the reducing solution of the present disclosure. The kit can be advantageous for facilitating manufacture of a conductive pattern-provided structure having excellent interlayer adhesion. More specifically, one aspect of the present disclosure provides a conductive pattern structure manufacturing kit comprising two or more selected from the group consisting of
a dispersion comprising copper oxide-containing particles;
a plating solution comprising EDTA (ethylenediaminetetraacetic acid); and
a reducing solution comprising a glycine compound represented by the following formula:

   (R¹)₂N-C-COOR²
wherein R¹ and R² are each independently hydrogen or a monovalent group, and the plurality of R¹ in the formula may be the same as or different from each other. Preferable configurational examples of each of the dispersion, the plating solution, and the reducing solution that can be included in the conductive pattern structure manufacturing kit of the present disclosure may be as described above herein, and the descriptions will not be repeated. The conductive pattern structure manufacturing kit preferably comprises the dispersion of the present disclosure and the plating solution of the present disclosure, or the dispersion of the present disclosure, the plating solution of the present disclosure, and the reducing solution of the present disclosure.

### EXAMPLES

Hereinafter, the present invention will be specifically described with reference to the Examples and Comparative Examples. However, the present invention is not limited to these examples.

<Evaluation method>

### [Hydrazine quantification method]

Hydrazine was quantified by a standard addition method. 33 µg of hydrazine, 33 µg of a surrogate substance (hydrazine¹⁵N₂H₄), and 1 ml of a solution of 1% benzaldehyde in acetonitrile were added to 50 µL of a sample (dispersion). Finally, 20 µL of phosphoric acid was added therein, and GC/MS (gas chromatography/mass spectrometry) measurement was carried out 4 h later.

Similarly, 66 µg of hydrazine, 33 µg of a surrogate substance (hydrazine¹⁵N₂H₄), and 1 ml of a solution of 1% benzaldehyde in acetonitrile were added to 50 µL of a sample (dispersion). Finally, 20 µL of phosphoric acid was added therein, and GC/MS measurement was carried out 4 h later.

Similarly, 133 µg of hydrazine, 33 µg of a surrogate substance (hydrazin¹⁵N₂H₄), and 1 ml of a solution of 1% benzaldehyde in acetonitrile were added to 50 µL of a sample (dispersion). Finally, 20 µL of phosphoric acid was added therein, and GC/MS measurement was carried out 4 h later.

Finally, 33 µg of a surrogate substance (hydrazine¹⁵N₂H₄) and 1 ml of a solution of 1% benzaldehyde in acetonitrile were added to 50 µL of a sample (dispersion) without adding hydrazine. Finally, 20 µL of phosphoric acid was added therein, and GC/MS measurement was carried out 4 h later.

A peak area value of hydrazine was obtained from the chromatogram at m/z = 207 from the above 4-point GC/MS measurement. A peak area value of the surrogate was then obtained from the mass chromatogram at m/z = 209. The x-axis represents the mass of hydrazine added/the mass of the surrogate substance added and the y-axis represents the peak area value of hydrazine/the peak area value of the surrogate substance, whereby a calibration curve according to the standard addition method was obtained.

The Y-intercept value obtained from the calibration curve was divided by the mass of hydrazine added/the mass of the surrogate substance added to obtain the mass of hydrazine.

### [Average particle size measurement]

The average particle size of the dispersion was measured by the cumulant method, using a FPAR-1000 manufactured by Otsuka Electronics Co., Ltd.

### [Thickness measurement]

Thickness was measured using a palpable film thickness measuring machine.
Apparatus: DektakXT manufactured by Bruker
Stylus force: 3 mg
Speed: 200 µm/s

### <Example 1>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of 1-heptanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 36 nm. The amount of hydrazine was 3000 ppm by mass.

The obtained dispersion was printed on a polyimide (PI) film (manufactured by DuPont-Toray Co., Ltd., Kapton 500H, 125 µm thick,) by inkjet printing.
Apparatus: DIMATIX material printer DMP-2831
Head: DMC-11610
Voltage: 25 V

After printing, the solvent in the coating film was volatilized in atmospheric air at 25 °C for 24 h to obtain Sample 1, which is a copper oxide-containing film. The film thickness of the resulting Sample 1 was 400 nm.

OPC Copper NCA manufactured by Okuno Chemical Industries Co., Ltd. (aqueous solution, EDTA content in plating bath of about 2.6% by mass), which is an electroless plating solution comprising EDTA (ethylenediaminetetraacetic acid), was heated to 60 °C and Sample 1 was immersed therein for 30 min. After treatment, the sample was removed and washed with water. After washing with water, the resistance value of the present sample was measured by the four-probe method and found to be 80 µΩ·cm. The thickness of the sample after treatment was 1000 nm, and the thickness of the plated layer was 600 nm. It was confirmed that copper was grown by plating.

### <Example 2>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of 1-heptanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 36 nm. The amount of hydrazine was 3000 ppm by mass.

1 mL of Colcoat PX (manufactured by Colcoat Co., Ltd.) was dropped onto a PET film (Cosmo Shine A4100 manufactured by Toyobo Co., Ltd., thickness 100 µm) and spin-coated at 1500 rpm for 50 s, followed by drying in an oven at 100 °C for 30 min to obtain a PET film with a coating layer (as an adhesion layer having a thickness of 50 nm).

The above dispersion was printed on the above PET film with a coating layer by inkjet printing.
Apparatus: DIMATIX material printer DMP-2831
Head: DMC-11610
Voltage: 25 V

After printing, the solvent in the coating film was volatilized in atmospheric air at 25 °C for 24 h to obtain Sample 2, which is a copper oxide-containing film. The film thickness of the resulting Sample 2 was 400 nm.

OPC Copper NCA manufactured by Okuno Chemical Industries Co., Ltd., which is an electroless plating solution, was heated to 60 °C and Sample 2 was immersed therein for 30 min. After treatment, the sample was removed and washed with water. After washing with water, the resistance value of the present sample was measured by the four-probe method and found to be 93 µΩ·cm. The thickness of the sample after treatment was 800 nm, and the thickness of the plated layer was 400 nm. It was confirmed that copper was grown by plating.

### <Example 3>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of 1-heptanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 36 nm. The amount of hydrazine was 3000 ppm by mass.

The obtained dispersion was printed on a polyimide film (manufactured by DuPont-Toray Co., Ltd., Kapton 500H, 125 µm thick) by inkjet printing.
Apparatus: DIMATIX material printer DMP-2831
Head: DMC-11610
Voltage: 25 V

After printing, the coating film was dried in atmospheric air at 25 °C for 24 h and the solvent in the coating film was volatilized to obtain Sample 3, which is a copper oxide-containing film. The film thickness of the resulting Sample 3 was 200 nm.

N,N-di(2-hydroxyethyl)glycine was dissolved in water to prepare a 32% by mass solution. Using this as a reducing solution, the reducing solution was heated to 80 °C, and the copper oxide-containing film was immersed therein for 5 min, followed by washing with ethanol to obtain a copper film.

OPC Copper NCA manufactured by Okuno Chemical Industries Co., Ltd., which is an electroless plating solution, was heated to 60 °C, and the sample was immersed therein for 30 min. After treatment, the sample was removed and washed with water. After washing with water, the resistance value of the present sample was measured by the four-probe method and found to be 12 µΩ·cm. The thickness of the sample after treatment was 1500 nm, and the thickness of the plated layer was 1300 nm. It was confirmed that copper was grown by plating.

### <Example 4>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of 1-heptanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 30 nm. The amount of hydrazine was 3000 ppm by mass.

The obtained dispersion was applied on a polyimide film (manufactured by DuPont-Toray Co., Ltd., Kapton 500H, 125 µm thick) by spin coating, the coating film was dried in atmospheric air at 25 °C for 24 h, and the solvent in the coating film was volatilized to obtain Sample 4, which is a copper oxide-containing film. The film thickness of the resulting Sample 4 was 1200 nm.

N,N-di(2-hydroxyethyl)glycine was dissolved in water to prepare a 16% by mass solution. Using this as a reducing solution, the reducing solution was heated to 73 °C, and the copper oxide-containing film was immersed therein for 10 min, followed by washing with water to obtain a copper film.

ACL-009 manufactured by C. Uyemura & Co., Ltd., which is a plating pretreatment solution, was dissolved in water to a concentration of 50 mL/L to obtain a treatment solution. The treatment solution was heated to 50 °C and Sample 4 was immersed therein for 5 min. After treatment, the sample was removed and washed with water. OPC Copper NCA manufactured by Okuno Chemical Industries Co., Ltd., which is an electroless plating solution, was then heated to 60 °C, and the sample was immersed therein for 30 min. After treatment, the sample was removed and washed with water. After washing with water, the resistance value of the present sample was measured by the four-probe method and found to be 36 µΩ·cm. The thickness of the sample after treatment as compared to that before plating treatment grew by 7200 nm. It was confirmed that copper was grown by plating.

### <Example 5>

Except that the temperature of the N,N-di(2-hydroxyethyl)glycine aqueous solution was set to 60 °C, Sample 5 was obtained in the same manner as in Example 4. The resistance value of the present sample was measured by the four-probe method and found to be 19 µΩ·cm. The thickness of the sample after treatment as compared to that before plating treatment grew by 8200 nm. It was confirmed that copper was grown by plating.

### <Example 6>

Except that the immersion time of the copper oxide-containing film in the N,N-di(2-hydroxyethyl)glycine aqueous solution was set to 5 min, Sample 6 was obtained in the same manner as in Example 5. The resistance value of the present sample was measured by the four-probe method and found to be 21 µΩ·cm. The thickness of the sample after treatment as compared to that before plating treatment grew by 8200 nm. It was confirmed that copper was grown by plating.

### <Example 7>

Except that the concentration of the N,N-di(2-hydroxyethyl)glycine aqueous solution was set to 8% by mass and the temperature of the N,N-di(2-hydroxyethyl)glycine aqueous solution was set to 73 °C, Sample 7 was obtained in the same manner as in Example 6. The resistance value of the present sample was measured by the four-probe method and found to be 13 µΩ·cm. The thickness of the sample after treatment as compared to that before plating treatment grew by 9600 nm. It was confirmed that copper was grown by plating.

### <Example 8>

Except that the immersion time of the copper oxide-containing film in the N,N-di(2-hydroxyethyl)glycine aqueous solution was set to 10 min, Sample 8 was obtained in the same manner as in Example 7. The resistance value of the present sample was measured by the four-probe method and found to be 10 µΩ·cm. The thickness of the sample after treatment as compared to that before plating treatment grew by 9600 nm. It was confirmed that copper was grown by plating.

### <Example 9>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of 1-heptanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 28 nm. The amount of hydrazine was 3000 ppm by mass.

The obtained dispersion was applied on a polyimide film (manufactured by DuPont-Toray Co., Ltd., Kapton 500H, 125 µm thick) by spin coating, the coating film was dried in atmospheric air at 25 °C for 24 h, and the solvent in the coating film was volatilized to obtain Sample 9, which is a copper oxide-containing film. The film thickness of the resulting Sample 9 was 500 nm.

Citric acid was dissolved in water to prepare a 24% by mass solution. Using this as a reducing solution, the reducing solution was heated to 60 °C, and the above copper oxide-containing film was immersed therein for 5 min, followed by washing with water to obtain a copper film.

ACL-009 manufactured by C. Uyemura & Co., Ltd., which is a plating pretreatment solution, was dissolved in water to a concentration of 50 mL/L to obtain a treatment solution. The treatment solution was heated to 50 °C and Sample 9 was immersed therein for 5 min. After treatment, the sample was removed and washed with water. OPC Copper NCA manufactured by Okuno Chemical Industries Co., Ltd., which is an electroless plating solution, was then heated to 60 °C, and the sample was immersed therein for 30 min. After treatment, the sample was removed and washed with water. After washing with water, the thickness of the sample after treatment as compared to that before plating treatment grew by 1300 nm. The resistance value of the present sample was measured by the four-probe method and found to be 13 µΩ·cm. It was confirmed that copper was grown by plating.

### <Examples 10 to 13>

### (Evaluation of inkjet suitability)

Except that the dispersion solvent was changed to butanol (Example 10), hexanol (Example 11), heptanol (Example 12), or octanol (Example 13), a dispersion (ink) was prepared by the same procedure as in Example 1. The resulting ink was evaluated for intermittent inkjet stability. The time until clogging of the nozzle occurred during intermittent discharge was measured and evaluated as follows: 1 h or more: A, 30 min or more and less than 1 h: B, and less than 30 min: C. The evaluation conditions for intermittent stability are as follows.
Apparatus: DIMATIX material printer DMP-2831
Head: DMC-11610
Voltage: 25 V
Number of discharge nozzles: 7 (No. 5 to 11)

Determination for presence of discharge: observation with DropWatcher

The butanol solvent ink was rated as C, the hexanol solvent ink was rated as B, and the heptanol solvent ink and the octanol solvent ink were rated as A. From these results, it was found that an ink using heptanol or octanol as a solvent has satisfactory inkjet suitability.

### <Comparative Example 1>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of ethanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 21 nm. The amount of hydrazine was 3000 ppm by mass.

The obtained dispersion was applied on a polyimide film (manufactured by DuPont-Toray Co., Ltd., Kapton 500H, 125 µm thick) by spin coating, the coating film was heated in an oven at 100 °C in atmospheric air for 1 h, and the solvent in the coating film was volatilized to obtain Sample 10, which is a copper oxide-containing film. The film thickness of the resulting Sample 10 was 1100 nm.

Sodium lauryl sulfate (4.9% by mass), 2-aminoethanol (4.9% by mass), glycine (4.9% by mass), diethylenetriamine (2.4% by mass), and water (82.9% by mass) were mixed as a pretreatment solution for plating and then diluted with water to 20 times the volume to obtain a treatment solution. The treatment solution was heated to 50 °C and Sample 10 was immersed therein for 5 min. After treatment, the sample was removed and washed with water. Next, a solution comprising copper sulfate (2.5 g/L as Cu), Rochelle salt (16 g/L), formalin (10 g/L as HCHO), 2,2-bipyridine (10 mg/L), polyethylene glycol (PEG) (100 mg/L), and an aqueous sodium hydroxide solution (added until the pH reached 12) as an electroless plating solution was heated to 60 °C, and the sample was immersed therein for 30 min. After treatment, the sample was removed and washed with water. Observation of the sample revealed that all of the formed copper oxide-containing film was separated, and no growth of copper plating could be confirmed.

### <Comparative Example 2>

Except that 0.5 g/L of nickel sulfate was added to the plating solution, Sample 11 was obtained in the same manner as in Comparative Example 1. Observation of the sample revealed that all of the formed copper oxide-containing film was separated, and no growth of copper plating could be confirmed.

### <Comparative Example 3>

Except that as a pretreatment for plating, a mixed liquid of sulfuric acid (36% by mass), ethylene glycol (4.3% by mass), polyoxyethylene lauryl ether (1.7% by mass), and water (58% by mass) diluted with water to 10 times the volume was heated to 40 °C and the sample was immersed therein for 5 min, Sample 12 was obtained in the same manner as in Comparative Example 1. Observation of the sample revealed that all of the formed copper oxide-containing film was separated, and no growth of copper plating could be confirmed.

### <Comparative Example 4>

806 g of copper(II) acetate monohydrate (manufactured by Kanto Chemical Co., Inc.) was dissolved in a mixed solvent of 7560 g of distilled water (manufactured by Kyoei Pharmaceutical Co., Ltd.) and 3494 g of 1,2-propylene glycol (manufactured by Kanto Chemical Co., Inc.), and then the solution temperature was brought to -5 °C using an external thermostat. 235 g of hydrazine monohydrate (manufactured by Tokyo Chemical Industry Co., Ltd.) was added over 20 min, and then stirred for 30 min in a nitrogen atmosphere, the solution temperature was brought to 25 °C using an external thermostat, and then stirred for 90 min in a nitrogen atmosphere. After stirring, the solution was separated into a supernatant and a precipitate using centrifugal separation. 13.7 g (dispersant content of 4 g) of DISPERBYK-145 (manufactured by BYK) (a phosphorus-containing organic substance of acid value: 76 mgKOH/g, amine value: 71 mgKOH/g) and 907 g of 1-heptanol (manufactured by Kanto Chemical Co., Inc.) were added to 390 g of the obtained precipitate, and the solution was dispersed in a nitrogen atmosphere using a homogenizer, to obtain 1365 g of a dispersion comprising cuprous oxide.

The dispersion was satisfactorily dispersed. The average particle size was 30 nm. The amount of hydrazine was 3000 ppm by mass.

The obtained dispersion was applied on a polyimide film (manufactured by DuPont-Toray Co., Ltd., Kapton 500H, 125 µm thick) by spin coating, the coating film was dried in atmospheric air at 25 °C for 24 h, and the solvent in the coating film was volatilized to obtain Sample 13, which is a copper oxide-containing film. The film thickness of the resulting sample was 200 nm.

N,N-di(2-hydroxyethyl)glycine was dissolved in water to prepare a 16% by mass solution. Using this as a reducing solution, the reducing solution was heated to 73 °C, and the copper oxide-containing film was immersed therein for 30 min, followed by washing with water to obtain a copper film.

Sodium lauryl sulfate (4.9% by mass), 2-aminoethanol (4.9% by mass), glycine (4.9% by mass), diethylenetriamine (2.4% by mass), and water (82.9% by mass) were mixed as a pretreatment solution for plating and then diluted with water to 20 times the volume to obtain a treatment solution. The treatment solution was heated to 50 °C and Sample 13 was immersed therein for 5 min. After treatment, the sample was removed and washed with water. Next, a solution comprising copper sulfate (2.5 g/L as Cu), Rochelle salt (16 g/L), formalin (10 g/L as HCHO), 2,2-bipyridine (10 mg/L), polyethylene glycol (PEG) (100 mg/L), and an aqueous sodium hydroxide solution (added until the pH reached 12) as an electroless plating solution was heated to 60 °C, and the sample was immersed therein for 30 min. After treatment, the sample was removed and washed with water. Observation of the sample revealed that all of the formed copper oxide-containing film was separated, and no growth of copper plating could be confirmed.

### <Evaluation summary>

From the viewpoint of conductive performance, a lower resistance value is desirable. Further, from the viewpoint of productivity, a faster plating growth rate is desirable. The resistance value was evaluated as: less than 15 µΩ·cm: 3 points, 15 µΩ·cm or more and less than 50 µΩ·cm: 2 points, and 50 µΩ·cm or more: 1 point. The plating growth thickness was evaluated as: less than 1000 nm: 1 point, 1000 nm or more and less than 5000 nm: 2 points, and 5000 nm or more: 3 points. Additionally, the sum of an evaluation score for resistance value and an evaluation score for plating growth thickness was taken as the total evaluation score. The results are shown in Table 1.

### [Table 1]

**Table 1**

| | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|
| Dispersion medium | heptanol | heptanol | heptanol | heptanol | heptanol | heptanol | heptanol | heptanol | heptanol | ethanol | ethanol | ethanol | heptanol |
| Base material | PI film | Colcoat PET film | PI film | PI film | PI film | PI film | PI film | PI film | PI film | PI film | PI film | PI film | PI film |
| System for coating film formation step | inkjet printing | inkjet printing | inkjet printing | spin coating | spin coating | spin coating | spin coating | spin coating | spin coating | spin coating | spin coating | spin coating | spraying |
| Drying step conditions | 25 °C, atmospheric air, 24 h | | | | | | | | | 100 °C, atmospheric air, 1 h | | | 25 °C, atmospheric air, 24 h |
| Inclusion of wet reduction step | no | no | yes | yes | yes | yes | yes | yes | yes | no | no | no | yes |
| Reducing solution composition | - | - | glycine derivative 32% by mass | glycine derivative 16% by mass | glycine derivative 16% by mass | glycine derivative 16% by mass | glycine derivative 8% by mass | glycine derivative 8% by mass | citric acid 24% by mass | - | - | - | glycine derivative 16% by mass |
| Wet reduction temperature (°C) | - | - | 73 °C | 73 °C | 60 °C | 60 °C | 73 °C | 73 °C | 60 °C | - | - | - | 73 °C |
| Wet reduction time (min) | - | - | 30 min | 30 min | 30 min | 5 min | 5 min | 10 min | 5 min | - | - | - | 30 min |
| Inclusion of plating pretreatment | no | no | no | yes | yes | yes | yes | yes | yes | yes | yes | yes | yes |
| Presence of EDTA in plating solution | yes | yes | yes | yes | yes | yes | yes | yes | yes | no | no | no | no |
| Resistance evaluation (points) | 1 | 1 | 3 | 2 | 2 | 2 | 3 | 3 | 2 | - | - | - | - |
| Plating growth film thickness evaluation (points) | 1 | 1 | 2 | 3 | 3 | 3 | 3 | 3 | 2 | - | - | - | - |
| Total evaluation score (points) | 2 | 2 | 5 | 5 | 5 | 5 | 6 | 6 | 4 | - | - | - | - |
| Separation of copper oxide-containing film | no | no | no | no | no | no | no | no | no | yes | yes | yes | yes |

### [Table 2]

**Table 2**

| | Solvent | Intermittent stability evaluation |
|---|---|---|
| Example 10 | butanol | C |
| Example 11 | hexanol | B |
| Example 12 | heptanol | A |
| Example 13 | octanol | A |

Note that, the present invention is not limited to the above embodiments or examples. Based on the knowledge of a person skilled in the art, design changes may be applied to the above embodiments or examples, and the above embodiments or examples may be arbitrarily combined. Aspects with such changes are also included within the scope of the present invention.

### INDUSTRIAL APPLICABILITY

An aspect of the present invention can be suitably applied to the manufacture of printed wiring boards, electronic devices, electromagnetic shielding, and antistatic films.

### REFERENCE SIGNS LIST

- 100: copper oxide ink
- 12: copper oxide
- 13: phosphate ester salt
- 13a: phosphorus
- 13b: ester salt
- 1: base material
- 2a: supernatant
- 2b: precipitate
- 2c: copper oxide-containing film
- 2d: layer of copper oxide and/or copper
- 2e: plated copper layer

## Claims

1. A method for manufacturing a conductive pattern-provided structure, comprising:
a coating film formation step of printing a dispersion comprising copper oxide-containing particles on a base material to obtain a coating film, and
a plating step of carrying out electroless plating on the coating film using a plating solution, wherein
the plating solution comprises EDTA (ethylenediaminetetraacetic acid).

2. The method for manufacturing a conductive pattern-provided structure according to claim 1, further comprising a reduction step before the plating step.

3. The method for manufacturing a conductive pattern-provided structure according to claim 2, wherein the reduction step is a wet reduction step.

4. The method for manufacturing a conductive pattern-provided structure according to claim 2 or 3, wherein the reduction step comprises immersing the coating film in a solution comprising a glycine compound represented by the following formula:
(R¹)₂N-C-COOR²
wherein R¹ and R² are each independently hydrogen or a monovalent group, and a plurality of R¹ in the formula may be the same or different from each other.

5. The method for manufacturing a conductive pattern-provided structure according to claim 4, wherein the glycine compound is N,N-di(2-hydroxyethyl)glycine.

6. The method for manufacturing a conductive pattern-provided structure according to claim 4 or 5, wherein the solution is an aqueous solution, and the glycine compound has a concentration of 1% by mass or greater and 50% by mass or less.

7. The method for manufacturing a conductive pattern-provided structure according to any one of claims 1 to 6, further comprising a delipidation step before the plating step.

8. The method for manufacturing a conductive pattern-provided structure according to any one of claims 1 to 7, wherein the coating film formation step is carried out by inkjet printing.

9. The method for manufacturing a conductive pattern-provided structure according to any one of claims 1 to 8, further comprising a drying step of drying the coating film between the coating film formation step and the plating step.

10. The method for manufacturing a conductive pattern-provided structure according to any one of claims 1 to 9, wherein the dispersion comprises a dispersant comprising a phosphate ester.

11. The method for manufacturing a conductive pattern-provided structure according to claim 10, wherein the dispersant has an acid value (mgKOH/g) of 20 or greater and 130 or less.

12. The method for manufacturing a conductive pattern-provided structure according to any one of claims 1 to 11, wherein the dispersion contains a reductant, and the reductant is hydrazine.

13. The method for manufacturing a conductive pattern-provided structure according to any one of claims 1 to 12, wherein the dispersion comprises one or more dispersion media selected from the group consisting of 1-hexanol, 1-heptanol, and 1-octanol.

14. The method for manufacturing a conductive pattern-provided structure according to any one of claims 1 to 13, wherein the copper oxide-containing particles have an average particle size of 1 nm or more and 100 nm or less.

15. The method for manufacturing a conductive pattern-provided structure according to any one of claims 1 to 14, wherein the plating solution comprises a copper ion source and a reductant.

16. The method for manufacturing a conductive pattern-provided structure according to claim 15, wherein the copper ion source is one or more selected from the group consisting of CuSO₄, CuCl₂, CuCl, CuNO₃, and Cu₃(PO₄)₂.

17. The method for manufacturing a conductive pattern-provided structure according to claim 15 or 16, wherein the reductant is one or more selected from the group consisting of formaldehyde, potassium tetrahydroxide, dimethylamine borane, glyoxylic acid, and phosphinic acid.

18. The method for manufacturing a conductive pattern-provided structure according to any one of claims 1 to 17, wherein the base material has an adhesion layer, and
in the coating film formation step, the dispersion is printed on the adhesion layer.

19. A conductive pattern structure manufacturing kit, comprising at least two selected from the group consisting of:
a dispersion comprising copper oxide-containing particles;
a plating solution comprising EDTA (ethylenediaminetetraacetic acid); and
a reducing solution comprising a glycine compound represented by the following formula:
(R¹)₂N-C-COOR²
wherein R¹and R² are each independently hydrogen or a monovalent group, and a plurality of R¹ in the formula may be the same as or different from each other.
